# EUROPÄISCHE PATENTSCHRIFT

(11) **EP 2 576 135 B1**
(45) Veröffentlichungstag und Bekanntmachung des Hinweises auf die Patenterteilung: **01.06.2016**
(21) Anmeldenummer: 11712515.3
(22) Anmeldetag: 29.03.2011
(51) Int. Cl.: B23Q 9/00

(54) **HANDWERKZEUGMASCHINE MIT FÜHRUNGSVORRICHTUNG**
HAND-HELD POWER TOOL WITH GUIDE DEVICE
MACHINE-OUTIL PORTATIVE AVEC DISPOSITIF DE GUIDAGE

(30) Priorität: 25.05.2010 DE 102010029247
(43) Veröffentlichungstag der Anmeldung: 10.04.2013
(73) Patentinhaber: Robert Bosch GmbH, 70442 Stuttgart (DE)
(72) Erfinder: DI NICOLANTONIO, Aldo, CH-4565 Recherswil (CH); ALTVATER, Bernd, 71566 Althuette-Waldenweiler (DE); HOFFMANN, Andre, 33142 Büren (DE)
(86) Internationale Anmeldenummer: PCT/EP2011/054840
(87) Internationale Veröffentlichungsnummer: WO 2011/147610

(56) Entgegenhaltungen:
- EP-A1- 0 496 047
- EP-A1- 0 709 156
- EP-A2- 0 314 954
- DE-A1- 3 410 552
- DE-A1- 10 203 426
- US-A- 2 676 624
- US-A- 3 839 789
- US-A- 5 941 227

## Beschreibung

Die Erfindung bezieht sich auf eine Handwerkzeugmaschine mit einer Führungsvorrichtung nach dem Oberbegriff des Anspruches 1.

### Stand der Technik

Bekannt sind Fußplatten an handgeführten Stich- oder Säbelsägen, die in Gebrauchsstellung auf der Werkzeugoberseite aufliegen, wobei das Sägewerkzeug durch eine Durchtrittsöffnung in der Fußplatte geführt ist. Die Unterseite der Fußplatte ist eben ausgebildet, so dass ein flächiger Kontakt zwischen der Fußplatte und der Werkstückoberseite besteht und die Stichsäge in einer verhältnismäßig stabilen Position geführt und die Gefahr reduziert ist, dass die Stichsäge während der Bearbeitung versehentlich zur Seite oder nach vorne bzw. hinten kippt. Die flächige Auflage der Fußplatte setzt aber eine verhältnismäßig reibarme Werkstückoberseite voraus, da ansonsten die Gefahr besteht, dass die Stichsäge bei der Vorschubbewegung seitlich verzogen wird. Dies kann auch der Fall sein, wenn Schmutz zwischen die Werkstückoberseite und die Fußplatte gerät.

Bekannt sind außerdem Winkelschleifer, deren Schleifwerkzeug von einer etwa halbkreisförmigen Schutzhaube übergriffen ist, deren Unterseite bei der Bearbeitung auf der Werkstückoberfläche aufliegt und über das Werkstück gleitet. Bei langen geraden Schnitten hängt die Schnittqualität wesentlich von den Fähigkeiten und Erfahrungen des Benutzers ab. Unebenheiten wie raue Oberflächen des Werkstücks oder Schmutzpartikel können das Bearbeitungsergebnis beeinträchtigen.

Die DE 34 10 552 A1 offenbart ein elektromotorisch angetriebenes Handwerkzeug mit einer Führungsplatte zum Auflegen auf das zu bearbeitende Werkstück. An der Führungsplatte ist eine Vorschubeinrichtung angeordnet, die eine motorisch angetriebene Vorschubrolle sowie ein auf der Vorschubrolle umlaufendes Transportband aufweist. Mithilfe der Vorschubeinrichtung erfolgt ein Vorschub mit konstanter Geschwindigkeit, wodurch eine gleichmäßige Werkstückbearbeitung erreicht werden soll.

Die EP 0 314 954 A2 und die EP 0 709 156 A1 zeigen Rollenanordnungen mit mehreren am Maschinengehäuse drehbar gelagerten Rollen. Die US 5 941 227, US 3 839 789, EP 0 496 047 A1 und US 2 676 624 offenbaren motorgetriebene Handkreissägen, deren Sägeblatt von einer Schutzhaube übergriffen ist, wobei an einer Fußplatte der Handkreissäge Rollen für eine erleichterte Führung angeordnet sind.

### Offenbarung der Erfindung

Der Erfindung liegt die Aufgabe zu Grunde, mit einfachen Maßnahmen das Arbeitsergebnis bei der Bearbeitung eines Werkstücks mit einer Handwerkzeugmaschine zu verbessern.

Diese Aufgabe wird erfindungsgemäß mit den Merkmalen des Anspruches 1 gelöst. Die Unteransprüche geben zweckmäßige Weiterbildungen an.

Die Führungsvorrichtung wird für handgeführte Werkzeugmaschinen eingesetzt, welche ein motorisch angetriebenes Werkzeug aufweisen, wobei als Antriebseinrichtung bevorzugt ein Elektromotor eingesetzt wird. Bei der Führungsvorrichtung handelt es sich beispielsweise um eine Fußplatte, insbesondere in elektromotorisch angetriebenen Handstich- bzw. Säbelsägen oder Kreissägen. In einer weiteren Ausführung bildet die Führungsvorrichtung eine Schutzhaube, welche in einer Handwerkzeugmaschine das Werkzeug übergreift, bei der es sich beispielsweise um einen Winkelschleifer handelt.

Die Führungsvorrichtung umfasst zum einen ein Führungsteil an der Unterseite der Handwerkzeugmaschine, welches bei der Bearbeitung auf der Werkstückoberseite aufliegt. Das Führungsteil ist bevorzugt benachbart zu dem Werkzeug angeordnet, in dem in der Ausführung des Führungsteils als Fußplatte das Werkzeug durch die Ausnehmung in der Fußplatte geführt oder in der Ausführung als Schutzhaube das Werkzeug, beispielsweise eine Trennscheibe, übergriffen ist.

Die Führungsvorrichtung umfasst des Weiteren eine auf dem Werkstück abrollende Rollenanordnung, welche zumindest eine am Führungsteil rotierend gelagerte Rolle umfasst. Bei der Rolle handelt es sich vorzugsweise um eine Einzelrolle, die drehbar gelagert ist. Die Rolle kann gegebenenfalls auch walzenförmig ausgebildet sein.

Bei der Werkstückbearbeitung liegt die Rollenanordnung bzw. ein Teil der Rollenanordnung unmittelbar auf dem Werkstück auf und rollt bei einer Vorschubbewegung auf dem Werkstück ab. Die Vorschubbewegung wird insbesondere manuell durch den Bearbeiter erzeugt, wobei grundsätzlich auch eine motorisch angetriebene Rollenanordnung in Betracht kommt.

Die Rollenanordnung rollt entweder über die Werkstückoberseite oder, gemäß einer weiteren Ausführung, um eine sonstige Anlagefläche des Werkstücks, beispielsweise eine seitliche Anlagefläche, die um 90° gedreht sein kann.

Im Unterschied zu Ausführungen aus dem Stand der Technik gleitet die Führungsvorrichtung nicht über die Werkstückoberfläche, sondern rollt auf dieser ab, was einen definierten Geradeauslauf unterstützt. So ist es beispielsweise möglich, bei Säge- bzw. Schleifwerkzeugmaschinen lange geradlinige Schnitte mit hoher Maßgenauigkeit durchzuführen. Die Beschaffenheit der Werkstückoberfläche und der Grad der Verschmutzung spielt eine deutlich geringere Rolle für die Bearbeitungsqualität als dies im Stand der Technik der Fall ist. Auch bei unterschiedlichen Beschaffenheiten der Werkstückoberseite kann die Rollenanordnung zielgenau und mit gleichmäßiger Geschwindigkeit über das Werkstück geführt werden.

Die mindestens eine Rolle, welche Bestandteil der Rollenanordnung an der Führungsvorrichtung ist, befindet sich üblicherweise an der in Gebrauchsstellung dem Werkstück zugewandten Unterseite des Führungsteils, wobei ggf. auch die seitliche bzw. vordere oder hintere Begrenzung des Führungsteils von der Rolle überragt werden kann, so dass die Rolle außerhalb der Umrandung des Führungsteils liegt, jedoch an dem Führungsteil gelagert ist.

Um ein schlupffreies Abrollen auch bei glatten, reibungsarmen Werkstückoberflächen zu gewährleisten, kann es zweckmäßig sein, den abrollenden Teil der Rollenanordnung mit einer reibungserhöhenden Oberfläche zu versehen, beispielsweise mit einer Gummierung oder einer aufgerauten Oberflächenstruktur.

Der abrollende Teil der Rollenanordnung wird, gemäß einer ersten vorteilhaften Ausführung, von der Rolle selbst gebildet, welche bei der Werkstückbearbeitung unmittelbar auf der Werkstückoberfläche aufliegt und auf dieser abrollt. Gemäß einer weiteren vorteilhaften Ausführung ist vorgesehen, dass die Rolle von einem Band oder einer Kette umschlungen ist, das bzw. die an der Unterseite des Führungsteils angeordnet ist und bei der Werkstückbearbeitung in Kontakt mit der Werkstücküberfläche steht. Das Band bzw. die Kette rollt auf der Werkstückoberfläche ab.

Gemäß einer zweckmäßigen Weiterbildung weist die Führungsvorrichtung zumindest zwei Einzelrollen auf, welche vorzugsweise achsversetzt zueinander angeordnet sind. Beispielsweise befindet sich in Vorschubrichtung gesehen am vorderen und am hinteren Ende des Führungsteils jeweils eine Einzelrolle, die entweder unmittelbar in Kontakt mit der Werkstückoberseite stehen oder von einem gemeinsamen Band bzw. einer Kette umschlungen sind, das bzw. die auf dem Werkstück aufliegt. Des Weiteren ist es möglich, auch im linken und rechten Seitenbereich des Führungsteils - bezogen auf die Vorschubrichtung - jeweils Rollen vorzusehen, die entweder als Einzelrollen ausgebildet sind und in Kontakt mit dem Werkstück stehen oder denen jeweils eine achsversetzte, zweite Rolle zugeordnet ist, wobei jeweils zwei Rollen von einem Band bzw. einer Kette umschlungen sind, das bzw. die auf der Werkstückoberseite abrollt.

Gemäß einer weiteren zweckmäßigen Ausführung sind zwei zueinander achsversetzt angeordnete Rollen an dem Führungsteil von einem Riemen umschlungen, welcher die Funktion hat, die Drehbewegungen der Rollen zu synchronisieren. Dem Riemen, der beispielsweise als Zahnriemen ausgebildet ist, kommt somit keine Abrollfunktion auf der Werkstückoberfläche zu, sondern allein eine Drehzahl synchronisierende Funktion. Daher ist es zweckmäßig, den Riemen gegenüber den Bauteilen, welche unmittelbar in Kontakt mit der Werkstückoberfläche gelangen, in Höhenrichtung versetzt anzuordnen, um einen unmittelbaren Kontakt des Riemens mit der Werkstückoberfläche zu vermeiden. Der abrollende Teil wird in dieser Ausführung von den Rollen gebildet, die als Laufräder ausgeführt sind. Vorzugsweise sind zwei im linken und rechten Seitenbereich des Führungsteils angeordnete Laufräder über eine gemeinsame Welle drehfest miteinander verbunden, wobei die Wellen im vorderen und im hinteren Bereich des Führungsteils über den Riemen gekoppelt sind.

Im Falle eines Bandes, einer Kette oder eines Riemens kann es zweckmäßig sein, eine zusätzliche Spannrolle an der Führungsvorrichtung drehbar zu lagern, an der das Band, die Kette bzw. der Riemen anliegt. Über die Spannrolle wird eine Spannkraft aufgebracht, die ein Durchhängen des Bandes, der Kette bzw. des Riemens verhindert.

Desweiteren ist es môglich, dle Bewegung zwischen zwei achsversetzten Rollen über einen Kardanantrieb oder mithilfe von Zahnrädern zu übertragen.

Weitere Vorteile und zweckmäßige Ausführungen sind den weiteren Ansprüchen, der Figurenbeschreibung und den Zeichnungen zu entnehmen. Es zeigen:
- Fig. 1: eine als Winkelschleifer ausgeführte Elektrohandwerkzeugmaschine mit einer das Werkzeug übergreifenden Schutzhaube, welche im vorderen und hinteren Bereich mit Rollen versehen ist,
- Fig. 2: die Handwerkzeugmaschine aus Fig. 1 in Draufsicht,
- Fig. 3: eine Fußplatte für eine Handwerkzeugmaschine mit vorderen und hinteren Rollen, über die ein Band bzw. eine Kette geschlungen ist,
- Fig. 4: die Führungsvorrichtung gemäß Fig. 3 in einer perspektivischen Darstellung,
- Fig. 5: die Führungsvorrichtung in einer weiteren perspektivischen Ansicht,
- Fig. 6: ein weiteres Ausführungsbeispiel einer Rollenanordnung für eine Führungsvorrichtung einer Werkzeugmaschine, wobei die Rollenanordnung eine vordere und eine hintere Welle mit jeweils zwei Rollen umfasst und die beiden Wellen über einen Zahnriemen verbunden sind,
- Fig. 7: die Rollenanordnung gemäß Fig. 6 im eingebauten Zustand in einer Fußplatte,
- Fig. 8: die Fußplatte in einer Ansicht von vorne,
- Fig. 9 bis 12: eine Fußplatte in einer Ausführungsvariante in verschiedenen Ansichten.

In den Figuren sind gleiche Bauteile mit gleichen Bezugszeichen versehen.

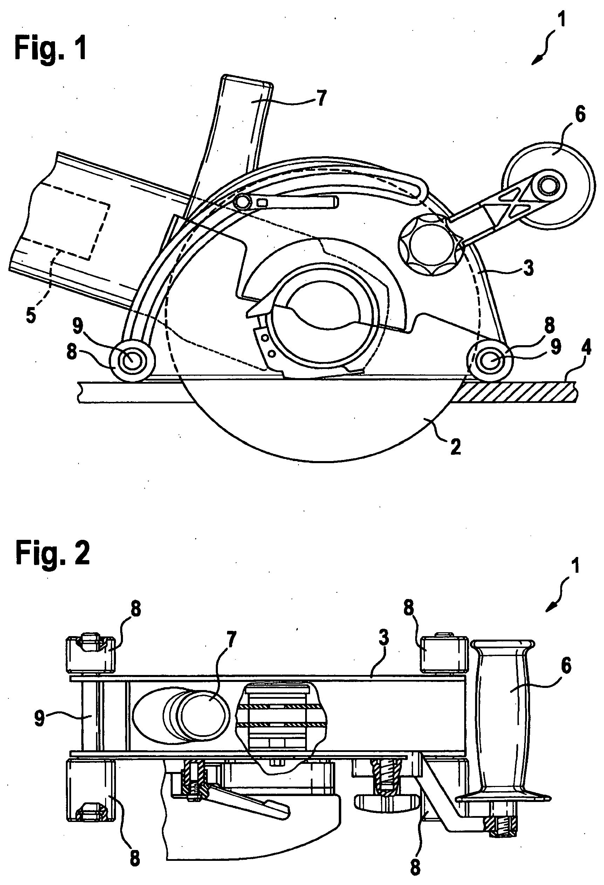

In den Fig. 1 und 2 ist eine als Winkelschleifer ausgeführte, elektrische Handwerkzeugmaschine 1 dargestellt, deren Werkzeug 2 als Trennscheibe ausgeführt ist, welche von einer halbkreisförmigen Schutzhaube 3 umgriffen ist. Bei der Werkstückbearbeitung liegt die Schutzhaube 3 auf der Werkstückoberseite 4 des Werkstückes auf; die Schutzhaube 3 bildet somit ein Führungsteil zur Führung der Handwerkzeugmaschine auf dem Werkstück. Der Antrieb des Werkzeugs erfolgt über einen elektrischen Antriebsmotor 5, die Halterung und Führung der Handwerkzeugmaschine 1 über Handgriffe 6 und 7.

Im vorderen und hinteren sowie in jedem Seitenbereich der Schutzhaube 3 sind insgesamt vier Rollen 8 angeordnet, welche eine Rollenanordnung zum Führen und Abstützen der Schutzhaube 3 auf der Werkstückoberseite 4 bilden. Jeweils eine drehbar an der Schutzhaube 3 gelagerte Rolle 8 befindet sich im vorderen linken, vorderen rechten, hinteren linken und hinteren rechten Bereich der Schutzhaube. Jeweils zwei seitlich zueinander versetzt angeordnete Rollen 8 sind an einer gemeinsamen Welle 9 gehalten, insbesondere drehfest gehalten, wobei grundsätzlich auch eine Ausführung der Rollen als Einzelrollen in Betracht kommt, die unabhängig voneinander drehbar gelagert sind.

Die Rollen können auch als Räder ausgeführt sein, welche gegenüber den walzenförmigen Rollen eine geringere Breite aufweisen. Da insgesamt vier Rollen 8 vorgesehen sind, ist die Handwerkzeugmaschine 1 bei der Werkstückbearbeitung stabil abgestützt und kann auf der Werkstückoberseite 4 bei der Werkstückbearbeitung entlangrollen. Um ein Rutschen bei einer Werkstückoberfläche mit geringem Reibungskoeffizienten zu verhindern, kann es zweckmäßig sein, die Rollen 8 mit einer Gummierung oder dergleichen zur Reibungserhöhung zu versehen.

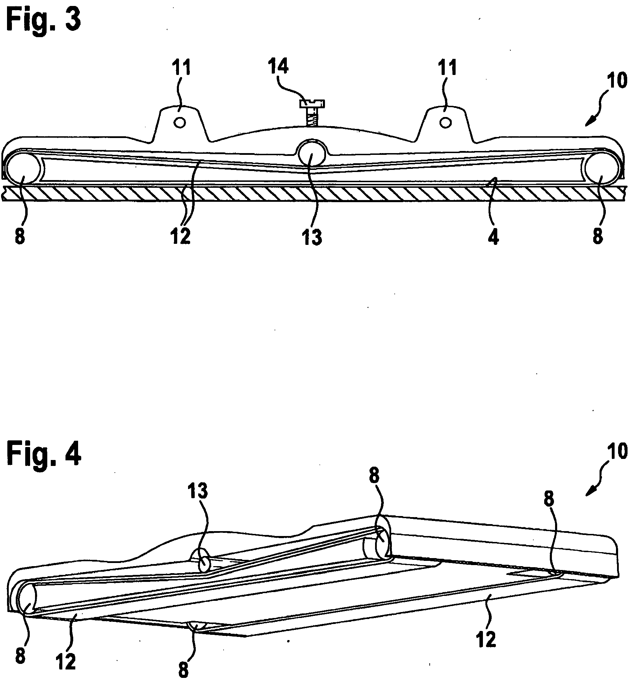

In den Fig. 3 bis 5 ist ein weiteres Ausführungsbeispiel für eine Führungsvorrichtung in einer Handwerkzeugmaschine dargestellt. Die Führungsvorrichtung wird von einer Fußplatte 10 gebildet, die beispielsweise bei Stich- oder Säbelsägen eingesetzt wird. Die Fußplatte 10 wird über Befestigungsflansche 11, welche einteilig an der Fußplatte 10 ausgebildet sind, mit dem Gehäuse der Handwerkzeugmaschine verbunden.

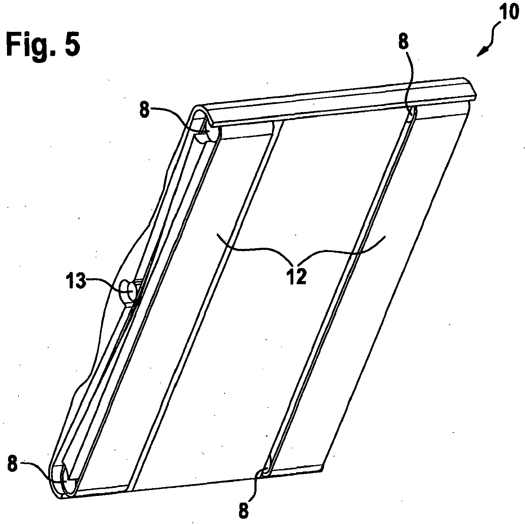

An der Fußplatte 10 sind Rollen 8 drehbar gelagert, die sich im vorderen und hinteren Bereich der Fußplatte 10 - in Bearbeitungsrichtung gesehen - befinden. Die Rollen 8 sind von einem Band 12 umschlungen, welches bei der Werkstückbearbeitung auf der Werkstückoberseite 4 aufliegt und entlang der Werkstückoberseite abrollen kann. Wie den perspektivischen Darstellungen gemäß den Fig. 4 und 5 zu entnehmen, sind im linken und rechten Seitenbereich der Fußplatte 10 auf der Unterseite jeweils derartige, sich in Längsrichtung erstreckende Bänder 12 angeordnet, die um zugeordnete Rollen 8 geschlungen sind.

Anstelle eines Bandes 12 kann auch eine Kette eingesetzt werden, die um die Rollen 8 geschlungen ist. In diesem Fall sind die Rollen 8 zweckmäßigerweise als Zahnräder ausgebildet.

Um die Spannung des Bandes 12 beeinflussen zu können, ist eine Spannrolle 13 höhenverschieblich an die Fußplatte 10 angeordnet, die über ein Spannmittel 14, welches vorzugsweise als Spannscheibe ausgeführt ist, in der Höhe einstellbar ist. Das Band 12 wird von der Spannrolle 13 quer zur Ebene des Bandes beaufschlagt. Je nach Höhenlage der Spannrolle 13, einzustellen über das Spannmittel 14, steigt oder fällt dadurch die Spannung des Bandes 12.

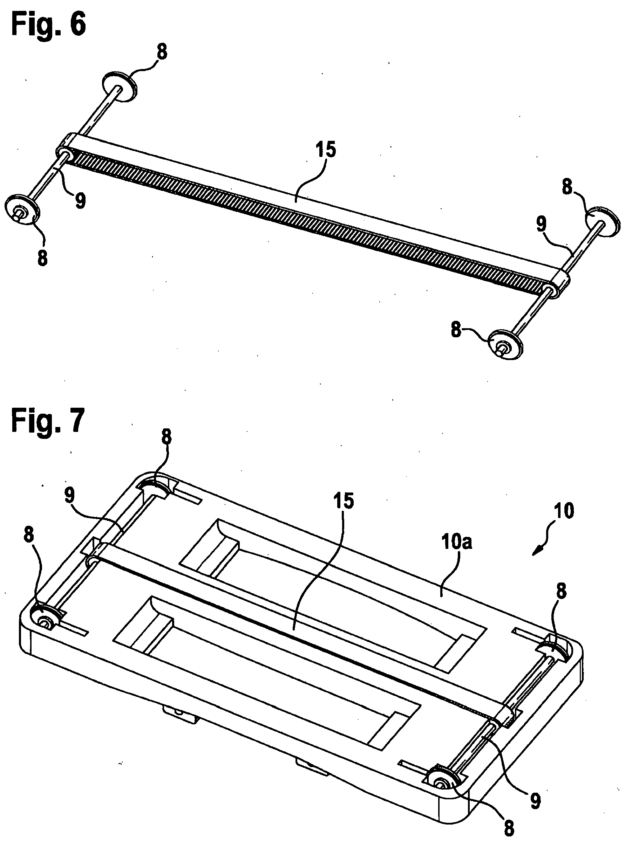

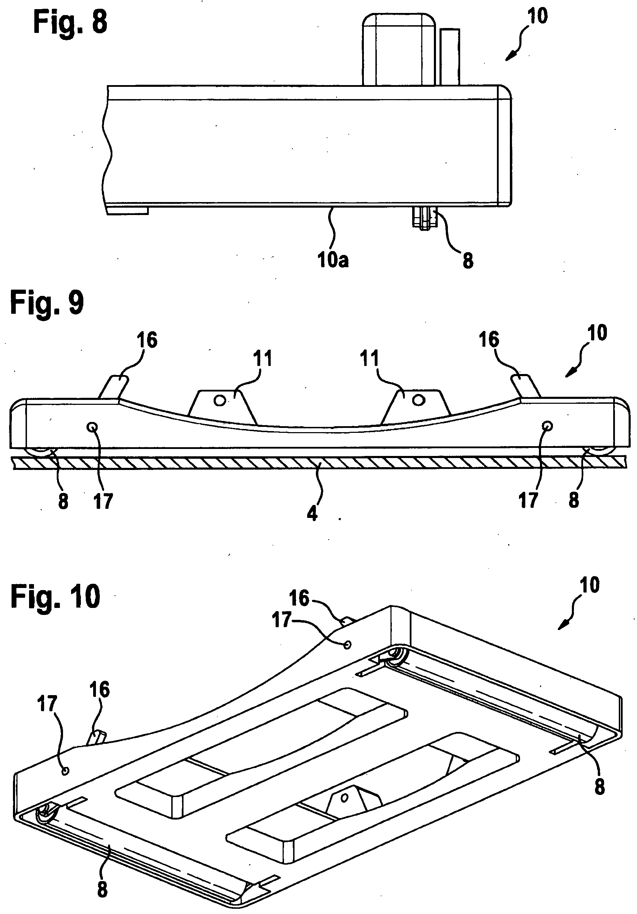

In Fig. 6 bis 8 ist ein weiteres Ausführungsbeispiel gezeigt. In Fig. 6 ist die Rollenanordnung in Einzeldarstellung gezeigt, welche in eine Fußplatte 10 (Fig. 7, 8) integriert wird. Die Rollenanordnung besteht aus zwei parallel versetzten Wellen 9, die jeweils Träger von zwei Rollen 8 im linken und rechten stirnseitigen Endbereich sind. Die Rollen 8 sind vorzugsweise drehfest mit der Welle 9 verbunden.

Die beiden Wellen 9 sind über einen Zahnriemen 15 miteinander verbunden, wobei über den Zahnriemen 15 eine Drehzahlsynchronisation der Wellen 9 bzw. der Rollen 8 erreicht wird. Der Zahnriemen 15 ist um einen mittleren Abschnitt jeder Welle 9 geschlungen, wobei dieser mittlere Abschnitt zur schlupffreien Bewegungsübertragung zweckmäßigerweise mit einer reibungserhöhenden Oberfläche versehen ist, beispielsweise mit einer Riffelung, oder gegebenenfalls auch als Zahnrad ausgeführt ist.

Fig. 7 zeigt eine Ansicht der Unterseite der Fußplatte 10 mit der integrierten Rollenanordnung. Die Wellen 9 mit den jeweiligen Rollen 8 sowie der verbindende Zahnriemen 15 sind jeweils in Ausnehmungen aufgenommen, die in die Fußplatte 10 eingebracht sind. Dadurch ist gewährleistet, dass, wie insbesondere Fig. 8 zu entnehmen, lediglich die Rollen 8 über die Unterseite 10a der Fußplatte 10 herausragen und somit bei der Werkstückbearbeitung in Kontakt mit der Werkstückoberseite gelangen, nicht jedoch der der Zahnriemen 15.

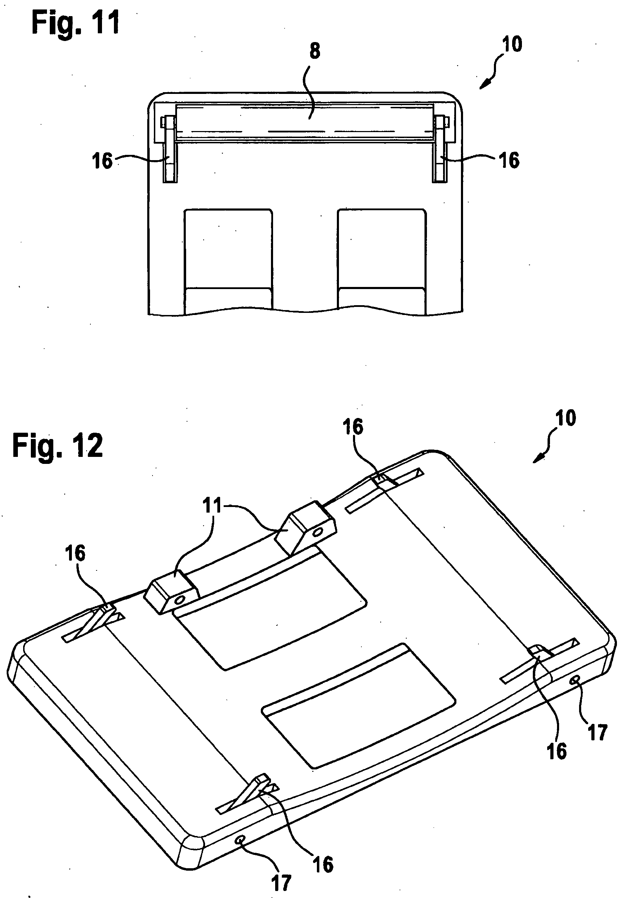

In den Fig. 9 bis 12 ist ein weiteres Ausführungsbeispiel für eine als Fußplatte 10 ausgebildete Führungsvorrichtung in einer Handwerkzeugmaschine dargestellt. Fig. 9 zeigt die Fußplatte in Seitenansicht, Fig. 10 in einer perspektivischen Ansicht mit einer Darstellung der Unterseite, Fig. 11 eine Ansicht von unten, Fig. 12 eine perspektivische Darstellung der Oberseite.

Die Fußplatte 10 weist an der Oberseite einstückig ausgebildete Befestigungsflansche 11 zur Befestigung mit dem Gehäuse der Handwerkzeugmaschine auf. Über die Unterseite ragen im vorderen und hinteren Bereich der Fußplatte Rollen 8 hinaus, so dass in der Gebrauchs- bzw. Betriebsposition der Handwerkzeugmaschine nicht die Unterseite der Fußplatte 10, sondern die Rollen 8 auf der Werkstückoberseite 4 aufliegen. Wie insbesondere den Fig. 10 und 11 zu entnehmen, sind die Rollen 8 im vorderen und hinteren Bereich der Fußplatte 10 jeweils als Führungswalzen ausgebildet, die sich annähernd über die Breite der Fußplatte 10 erstrecken. Für einen besseren Kontakt zur Werkstückoberseite besitzen die Rollen 8 eine elastische Lauffläche, beispielsweise in Form einer auf die Rollen aufgebrachten Gummierung. Die beiden Führungswalzen 8, welche benachbart zur Vorderseite und zur Hinterkante der Fußplatte 10 angeordnet sind, sind unabhängig voneinander drehbar in der Fußplatte 10 gelagert. Es besteht keine kinematische Kopplung über ein umschlingendes Band bzw. einen Riemen oder dergleichen.

Jeder Rolle 8 ist ein Betätigungshebel 16 zugeordnet, der an einer Achse 17 verschwenkbar an der Fußplatte 10 gelagert und mit der Rolle 8 verbunden ist bzw. in Kontakt steht. Die Rolle 8 ist in einer Ausnehmung in der Fußplatte 10 höhenverstellbar aufgenommen, so dass die Relativposition der Rolle 8 in Bezug auf die Unterseite der Fußplatte 10 verstellt werden kann. Über ein Verschwenken des Betätigungshebels 16 um die zugeordnete Achse 17 wird die Höhenposition der Rolle 8 in der Fußplatte 10 eingestellt. Hierbei ist jeder Winkellage des Betätigungshebels 16 genau eine definierte Höhenposition der Rolle 8 zugeordnet. Auf diese Weise kann der Überstand der Rolle 8 über die Unterseite der Fußplatte 10 eingestellt werden.

Jede Rolle 8 weist im linken und rechten Seitenbereich jeweils einen Betätigungshebel 16 auf, wobei die beiden Betätigungshebel 16 pro Rolle 8 unabhängig voneinander zu betätigen sind, wodurch auch Schieflagen der Rolle 8, bezogen auf die Unterseite der Fußplatte 10, eingestellt werden können, bei denen die Drehachse der Rolle 8 bezogen auf eine Mittelebene oder die Unterseite der Fußplatte 10 winklig angeordnet ist. Alternativ sind auch Ausführungen möglich, bei denen pro Rolle 8 nur ein einziger Betätigungshebel 16 vorgesehen ist.

Die beiden Rollen 8 im vorderen und hinteren Bereich der Fußplatte 10 sind über jeweils zugeordnete Betätigungshebel 16 unabhängig voneinander höhenverstellbar einzustellen.

## Patentansprüche

1. Handwerkzeugmaschine mit einer Führungsvorrichtung mit einem auf die Werkstückoberseite (4) eines zu bearbeitenden Werkstücks aufsetzbaren Führungsteil (3, 10), an dem eine auf dem Werkstück (4) abrollende Rollenanordnung mit mindestens einer am Führungsteil rotierend gelagerten Rolle (8) gehalten ist, **dadurch gekennzeichnet, dass** die Rolle (8) höhenverstellbar gehalten ist.

2. Handwerkzeugmaschine nach Anspruch 1, **dadurch gekennzeichnet, dass** mindestens zwei achsversetzte Rollen (8) vorgesehen sind.

3. Handwerkzeugmaschine nach Anspruch 1 oder 2, **dadurch gekennzeichnet, dass** die Rolle (8) von einem Band (12) oder einem Riemen umschlungen ist.

4. Handwerkzeugmaschine nach Anspruch 3, **dadurch gekennzeichnet, dass** das Band (12) auf der Unterseite der Führungsvorrichtung verläuft und in der Gebrauchsposition auf der Werkstückoberseite (4) aufliegt.

5. Handwerkzeugmaschine nach Anspruch 3 oder 4, **dadurch gekennzeichnet, dass** eine Spannrolle (13) an der Führungsvorrichtung drehbar gelagert ist und die Spannrolle (13) an dem Band (12) anliegt.

6. Handwerkzeugmaschine nach einem der Ansprüche 1 bis 5, **dadurch gekennzeichnet, dass** in jedem Seitenbereich der Führungsvorrichtung (3, 10) jeweils mindestens eine Rolle (8) angeordnet ist.

7. Handwerkzeugmaschine nach Anspruch 6, **dadurch gekennzeichnet, dass** gegenüberliegende Rollen (8) an einer gemeinsamen Welle (9) angeordnet sind.

8. Handwerkzeugmaschine nach einem der Ansprüche 1 bis 7, **gekennzeichnet durch** eine Ausführung als Fußplatte (10).

9. Handwerkzeugmaschine nach einem der Ansprüche 1 bis 7, **dadurch gekennzeichnet dass** die Führungsvorrichtung als Schutzhaube (3) ausgeführt ist.

10. Handwerkzeugmaschine nach mindestens einem der vorhergehenden Ansprüche, wobei die Handwerkzeugmaschine ein Winkelschleifer oder eine Kreis- oder Stichsäge ist.

## Claims

1. Portable power tool having a guide device with a guide part (3, 10) which is placeable on the workpiece top side (4) of a workpiece to be machined and on which a roller arrangement that rolls on the workpiece (4) and has at least one roller (8) mounted in a rotating manner on the guide part is held, **characterized in that** the roller (8) is held in a height-adjustable manner.

2. Portable power tool according to Claim 1, **characterized in that** at least two axially offset rollers (8) are provided.

3. Portable power tool according to Claim 1 or 2, **characterized in that** the roller (8) is wrapped by a band (12) or a belt.

4. Portable power tool according to Claim 3, **characterized in that** the band (12) runs on the underside of the guide device and rests against the workpiece top side (4) in the use position.

5. Portable power tool according to Claim 3 or 4, **characterized in that** a tension roller (13) is rotatably mounted on the guide device and the tension roller (13) bears against the band (12).

6. Portable power tool according to one of Claims 1 to 5, **characterized in that** in each case at least one roller (8) is arranged in each side region of the guide device (3, 10).

7. Portable power tool according to Claim 6, **characterized in that** opposing rollers (8) are arranged on a common shaft (9).

8. Portable power tool according to one of Claims 1 to 7, **characterized by** an embodiment as a sole plate (10).

9. Portable power tool according to one of Claims 1 to 7, **characterized in that** the guide device is embodied as a protective hood (3).

10. Portable power tool according to at least one of the preceding claims, wherein the portable power tool is an angle grinder, a circular saw or a jigsaw.

## Revendications

1. Machine-outil portative comprenant un dispositif de guidage avec une partie de guidage (3, 10) pouvant être placée sur le côté supérieur (4) d'une pièce à usiner sur laquelle est fixé un agencement de rouleau roulant sur la pièce (4) avec au moins un rouleau (8) supporté en rotation sur la partie de guidage, **caractérisée en ce que** le rouleau (8) est fixé de manière réglable en hauteur.

2. Machine-outil portative selon la revendication 1, **caractérisée en ce qu'**au moins deux rouleaux (8) d'axes décalés sont prévus.

3. Machine-outil portative selon la revendication 1 ou 2, **caractérisée en ce que** le rouleau (8) est entouré par une bande (12) ou une courroie.

4. Machine-outil portative selon la revendication 3, **caractérisée en ce que** la bande (12) s'étend sur le côté inférieur du dispositif de guidage et repose dans la position d'utilisation sur le côté supérieur de la pièce (4).

5. Machine-outil portative selon la revendication 3 ou 4, **caractérisée en ce qu'**un rouleau de tensionnement (13) est supporté de manière rotative sur le dispositif de guidage et le rouleau de tensionnement (13) s'applique contre la bande (12).

6. Machine-outil portative selon l'une quelconque des revendications 1 à 5, **caractérisée en ce qu'**à chaque fois au moins un rouleau (8) est disposé dans chaque région latérale du dispositif de guidage (3, 10).

7. Machine-outil portative selon la revendication 6, **caractérisée en ce que** des rouleaux opposés (8) sont disposés sur un arbre commun (9).

8. Machine-outil portative selon l'une quelconque des revendications 1 à 7, **caractérisée par** une réalisation en tant que plaque de base (10).

9. Machine-outil portative selon l'une quelconque des revendications 1 à 7, **caractérisée en ce que** le dispositif de guidage est réalisé sous forme de capot de protection (3).

10. Machine-outil portative selon au moins l'une quelconque des revendications précédentes, la machine-outil portative étant une meuleuse d'angle ou une scie circulaire ou une scie sauteuse.
